# EUROPEAN PATENT SPECIFICATION

(11) **EP 0 530 427 B1**
(45) Date of publication and mention of the grant of the patent: **08.11.1995**
(21) Application number: 91810717.8
(22) Date of filing: 05.09.1991
(51) Int. Cl.: G01N 27/00, G11B 9/08, G11B 9/00

(54) **Multiple STM-tip unit, method for manufacturing and application thereof in a direct access storage unit**
Einheit mit mehreren Spitzen für ein Rastertunnelmikroskop, Verfahren für deren Herstellung und Anwendung derselben in einer Speichereinheit mit direktem Zugriff
Unité à plusieurs pointes pour un microscope de balayage à effet tunnel, méthode de sa fabrication et son application dans une unité de stockage à accès direct

(43) Date of publication of application: 10.03.1993
(73) Proprietor: International Business Machines Corporation, Armonk, N.Y. 10504 (US)
(72) Inventor: Guéret, Pierre Léopold, Dr., CH-8800 Thalwil (CH)
(74) Representative: Barth, Carl Otto

(56) References cited:
- EP-A- 0 363 550
- EP-A- 0 381 113
- WO-A-91/03701

## Description

The invention relates to a multiple-tip assembly of the type used in scanning tunneling microscopy, to a method for manufacturing such a multiple-tip assembly, and to an application of such an assembly in a direct access storage unit.

For use in scanning tunneling microscopy single tips have been developed that consist of a thin wire or whisker, ordinarily made of tungsten, which is sharpened at one end to a point. Ideally, the point carries only one single atom at its apex. Tips of this kind are known from H.W. Fink, "Mono-atomic tips for scanning tunneling microscopy", IBM J. Res. Dev. Vol. 30, no. 5, September 1986, pp. 460-465. While mono-atomic tips are preferred, the invention is fully operable with ordinary tips. An example are tips obtained through etching.

One multiple-tip arrangement has been described in EP-A-0 194 323 in connection with a scanning tunneling microscope of which it forms an essential part. By etching a planar silicon chip, cantilever beams are formed having six degrees of freedom to move under the control of electrostatic forces. Attached to each one of the cantilever beams is a tunnel tip which can interact with a defined part of a surface to be investigated.

Another multiple-tip arrangement is known from EP-A-0 247 219 in connection with a distance-controlled transducer employed in a direct access storage unit, where the tips are individually attached to cantilever beams manufactured by etching from a common silicon body. Each of the cantilever beams, and hence each one of the tips is individually adjustable by electrostatic means with respect to the surface of the storage medium.

A similar multiple-tip arrangement is shown in EP-A-0 363 550 with the additional feature of having electronic circuitry for each of the tunnel tips integrated on the chip, in particular for controlling the distance of the tips from the surface of the associated storage medium.

Another arrangement with a planar array of (multiple) tunnel tips is known from EP-A-0 382 192 which relates to a tunnel current memory apparatus. In this reference, the tunnel tip array as well as the storage element are disposed on cantilevers which are driven by piezoelectric means.

None of the references cited above discloses a multiple tip arrangement of the type where the tips originally form a common sandwiched block from which they can be manufactured by lithographic techniques as in the present invention.

The present invention is directed to a multiple STM-tip unit comprising a plurality of individually connectable, electrically separated tunnel tips, and is characterized in that the tunnel tips are designed as pointed portions of sandwich structures comprising, in a common sandwiched block, a plurality of conductive layers each associated with at least one of said tunnel tips with insulating layers intercalated between said conducting layers, the latter each having a contact pad for connection to appertaining electronics, the thickness, area, and material characteristics of said insulating layers being chosen such that the tunnel current through an insulating layer which is intercalated between any two adjacent conducting layers is negligible with respect to the tunnel current flowing across the gap between each of the two involved tunnel tips and the surface with which said tips cooperate.

The invention also relates to a method for manufacturing a multiple-tip unit of the kind described above, that method being characterized by the following process steps:
- providing a substrate coated with a layer of soluble resist and a layer of photoresist on top of said resist layer:
- providing at least one hole in said photoresist layer of a size and shape to accommodate the multiple-tip unit structure;
- providing a first insulating layer to cover the entire bottom area of said hole;
- depositing a first electrically conducting layer on top of said insulating layer, using a first mask;
- depositing a second insulating layer through said hole, using a second mask;
- depositing a second conducting layer on top of said second insulating layer, still using said second mask;
- depositing any further insulating layers and conducting layers as the design of the multiple-tip unit may require, using any further masks as appropriate;
- dissolving the photoresist; and
- detaching the resulting structure from the substrate by dissolving said resist.

Details of a preferred embodiment of the invention as well as of a recommended method for manufacturing such embodiment will hereafter be described by way of example and with reference to the drawings in which:
- *Fig. 1*: shows the basic principle of a multiple-tip head in accordance with the invention;
- *Fig. 2*: shows the structure of Fig. 1 in a tilted position;
- *Fig. 3*: is a perspective view of a two-tip unit:
- *Fig. 4*: depicts an arrangement with three rows of twin-tips;
- *Figs. 5 to 11*: respectively show top-plan view and cross-section of a multiple-tip arrangement at various manufacturing stages;
- *Fig. 12*: is a perspective view of the three-tip structure of Fig. 11;
- *Fig. 13*: illustrates an alternative manufacturing process step;
- *Fig. 14*: schematically shows the use of a twin-tip unit in surface transport studies;
- *Fig. 15*: schematically shows the use of a multiple-tip unit in connection with studies on field-effect devices; and
- *Fig. 16*: is a schematic representation of a disk storage unit employing a multiple-tip read/write head.

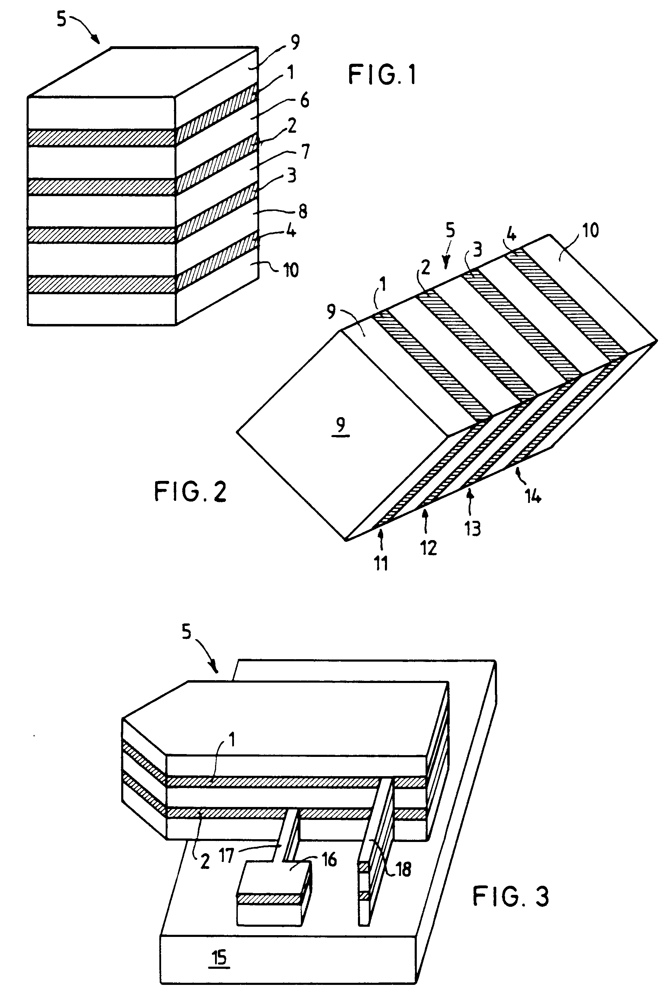

The basic concept of the multiple tip unit of the present invention is shown in Fig. 1 where, for example, four layers 1...4 of metallic or other electrically conducting material (including semiconductors and high-T_{C} super-conductors) are arranged in a common block 5, with layers 6...8 of insulating material intercalated between them. Of course, there may be less or many more conducting layers 1...4 combined into one single block 5, depending on the particular application. It is to be noted that the conducting layers do not have to be all of the same material, and the insulating layers 6...8 may, for example, consist of some oxide material, such as SrTiO₃, which during manufacturing can be sputtered onto the actual uppermost conducting layer 1...4. Additional insulating layers 9 and 10 may be deposited to protect the uppermost and lowermost conducting layers 1 and 4, respectively. For stability reasons, manufacture would probably best be started with a rather thick insulating layer 10 which can serve as a substrate.

The successive stacking of the various conducting and insulating layers 1...4 and 6...10, respectively, by evaporation and oxide sputtering, for example, allows a very precise control of the thicknesses t_{M} and tₒₓ of these layers, so that t_{M} = 1 nm and tₒₓ = 2...3 nm appear feasible. However, the thickness of the insulating layers 6...8 between adjacent conducting layers 1...4 should not be made too small so that the tunneling current across the insulating layers 6...8 remains negligible compared to the tunneling current flowing across the gap between any one of the tips 11...14 and the sample or the storage medium.

Using high-resolution e-beam lithographic techniques for cutting block 5, corners with a radius of 10 nm or even less can be obtained. Fig. 2 shows block 5 of Fig. 1 tilted over so that the top insulating layer 9 becomes the front of block 5 looking against the viewer. The four corners of conducting layers 1...4 point downwards in Fig. 2 assuming their role as tunnel tips 11...14. The sandwich structure of block 5 permits each tip 11...14 to be connected individually to the outside world by contacting the conducting layers 1...4.

After cutting to the desired dimension, block 5 is mounted to a larger support 15 for easy handling, as shown in Fig. 3 for a two-tip unit. The sandwiched structure of a multiple-tip unit in accordance with the invention permits the contacting to the individual tips to be made by contact pads, such as pad 16, which may be arranged on support 15 and connected to the conducting layers 1, 2 by a bridge 17, 18.

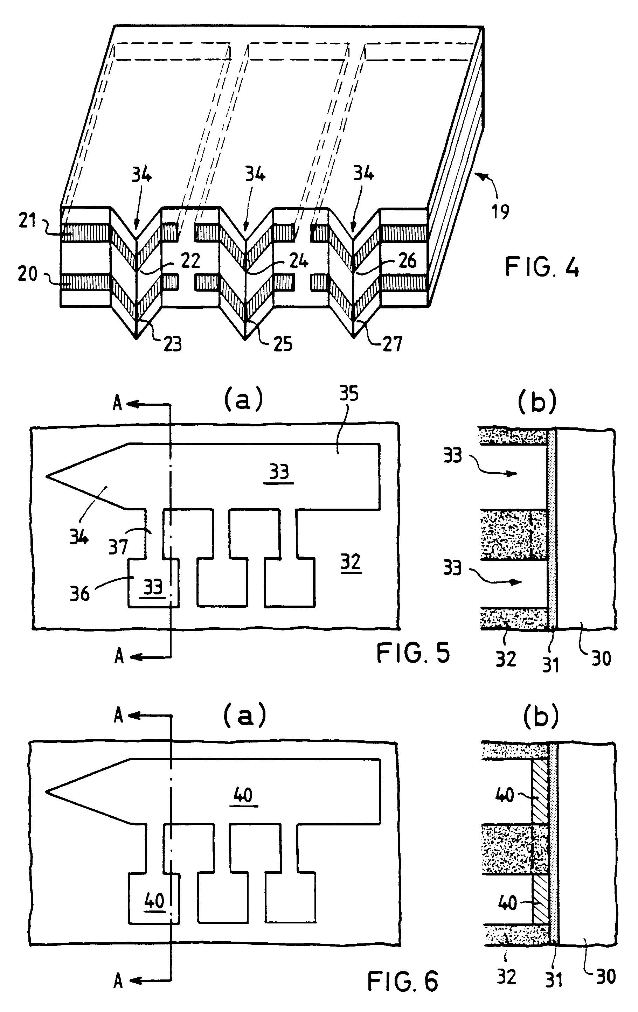

Fig. 4 shows an arrangement with three rows of twin tips in an array cut from a common sandwiched block 19. It will be clear to those skilled in the art that the conducting layers 20 and/or 21 may be interrupted inside block 19 to allow each of the tips 22...27 to be contacted individually or jointly, as the specific application may dictate.

The following calculation is intended to give an idea of dimensional requirements involved in the design of a multiple tip unit in accordance with the invention. The tip-to-sample tunnel conductance G_{T} is in the order of${\text{G}}_{\text{T}} {\text{≃G₀·T}}_{\text{T}}$ whereas the tunnel conductance through the insulator, Gₒₓ, is in the order of 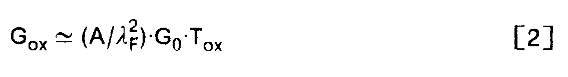
where $\text{G₀ = q²/πℏ}$ , with $\text{q = e}$ is the charge of the electron, A is the conductor or insulator area, λ_{F} is the Fermi wavelength in the conductor, and T_{T} and Tₒₓ are respectively the tunneling transmission coefficients of the tunnel gap and of the insulator material. A suitable design requires that 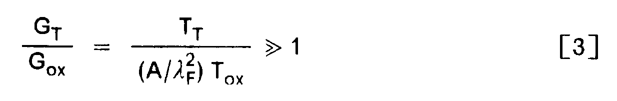
Under the assumption that the tip/surface distance is not larger than t_{M}, and that the vacuum and insulator barriers Φ are the same and equal to 4 eV, and that the tunneling probability ${\text{T}}_{\text{ox}} \text{= e a√} \overline{{\text{Φt}}_{\text{ox}}}$ , with the proportionality factor ${\text{a = 11.3nm⁻¹(eV)}}^{\text{-1/2}}$ , equation [3] yields approximately: 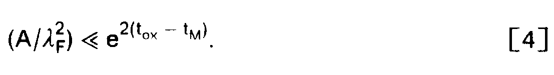
With $\text{λF≃3 × 10⁻⁸cm}$ , tₒₓ= 3nm, t_{M} = 1 nm, equation [4] yields for the insulator area: A « 150 × 150 cm² , that is A should be about 1 cm² . The lateral size of a unit block can thus be fairly large and suitable for handling.

In the following, two preferred methods for manufacturing the multiple-tip unit in accordance with the invention will be described. While only the most significant steps shall be explained, it will be obvious to those skilled in the art that various additional rinsing, cleaning, registering, testing, and other steps are required in the manufacture of the multiple-tip units of the invention.

The following description will refer to Figs. 5...11 in which **(a)** always indicates a top plan view and **(b)** always indicates a cross-section along the lines A-A through C-C in the respective (a)-part of the figure.

### Method 1:

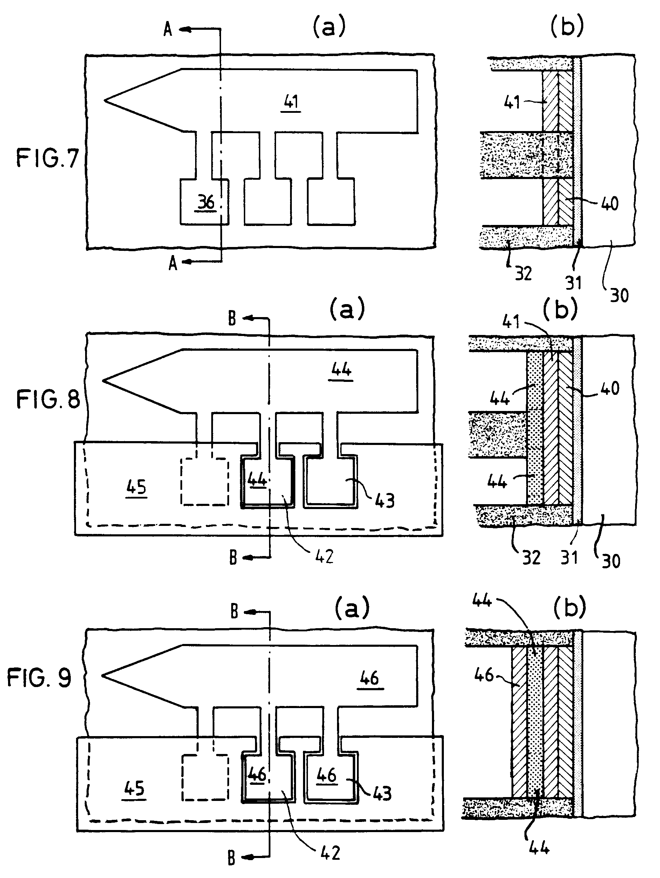

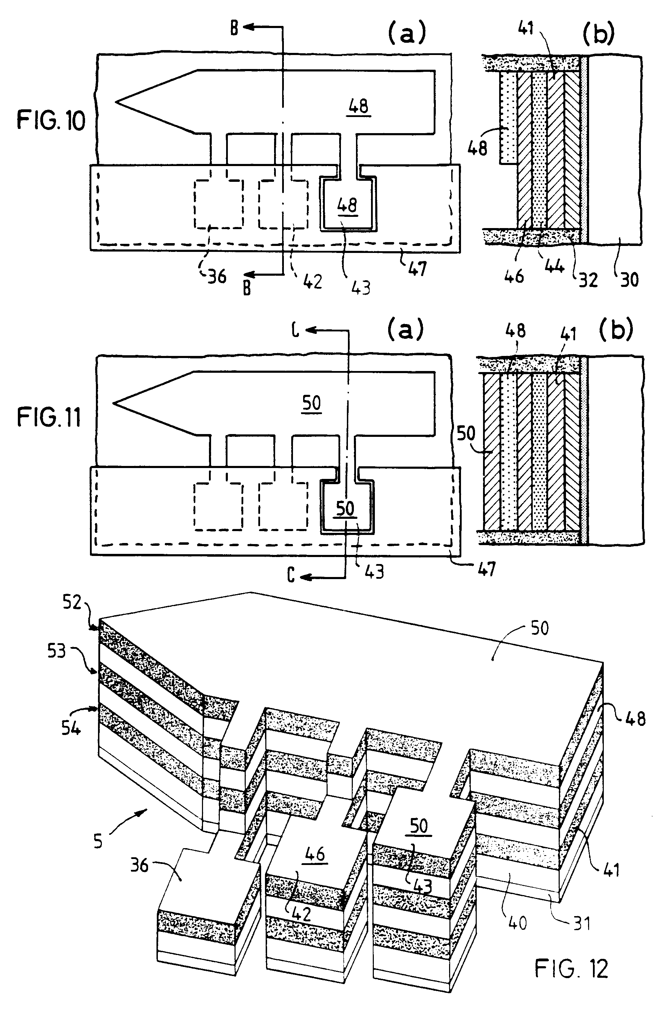

1. A substrate 30 (Fig. 5) of a size making handling easy is covered with a layer of soluble resist 31 which will allow the multiple-tip structure to be detached from the substrate 30 after fabrication is completed. The resist-covered substrate 30/31 is coated with a layer of photoresist 32. The thickness of photoresist 32 is chosen to be at least equal to the sum of all thicknesses of the conducting and insulating layers to be subsequently deposited.
2. Photoresist 32 is illuminated with a high-resolution e-beam and developed so as to open a hole 33 therein with a shape as shown in Fig. 5 for a three-tip unit, for example. This shape accommodates a pointed portion 34 which is later to become the multiple tip, an elongated body portion 35, and three contact pads, such as pad 36, attaching to body portion 35 through bridges 37...39.
3. The first insulator layer 40 is then sputtered through hole 33, covering the entire bottom thereof (Fig. 6).
4. Still through the same hole 33, on top of first insulator layer 40, the first conducting layer 41 is evaporated, as shown in Fig. 7(a), covering all pads.
5. The second insulator layer 44 is sputtered through hole 33, using a first mask 45 to cover pad 36 (Fig. 8) but leaving pads 42 and 43 uncovered.
6. Still through said first mask 45, the second conducting layer 46 is evaporated covering the entire body 34/35 and pads 42 and 43 with their bridges 38 and 39 (Fig. 9).
7. Using a second mask 47 which covers pads 36 and 42, a third insulator layer 48 is sputtered (Fig. 10). associated contact pad 43 (Fig. 10).
8. Still through said third mask 47, the third conducting layer 50 is evaporated covering the entire body and pad 43 with its bridge 39 to form the third tip and its associated contact pad 43 (Fig. 11).
9. The photoresist 32 is then dissolved (lifted off). Fig. 12 is a perspective view of the resulting structure with the photoresist already removed.
10. The structure is then detached from the substrate by dissolving the resist 31.
11. Finally, the structure is coated with a protective layer (not shown) and attached to an appropriate holder, leaving the tip zone free for interaction, and contacts are made to the pads 36, 42 and 43.

### Method 2:

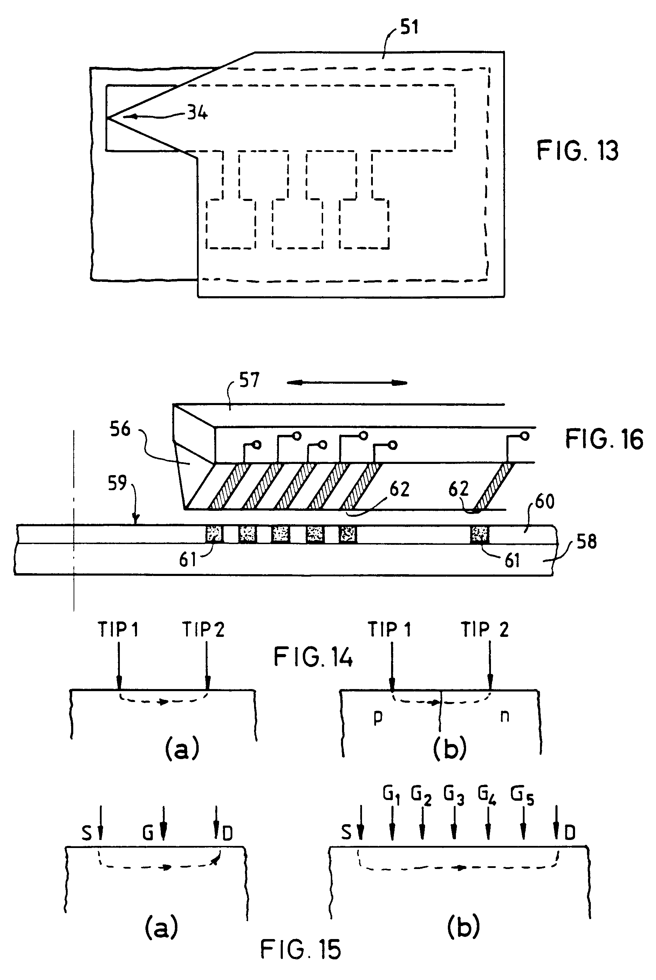

1. Perform all steps 1 to 8 of Method 1, except that instead of providing a corner for the pointed portion 34, a rectangular recess for body portion 35 is created.
2. Cover with photoresist, illuminate with an e-beam outside the area 51 as shown by the continuous line in Fig. 13, and develop.
3. Dry-etch the non-covered part and define the pointed portion 34 containing the tips 52...54.
4. Perform the steps 9-11 of Method 1.

### Examples for the application of multiple-tip units are the following:

Two tips with a mutual distance in the order of 3 nm can be used for transport measurements *between* two neighboring regions on the surface of a sample under investigation (Fig. 14(a).
- The twin-tip arrangement is suitable for the study of local transport phenomena across interfaces (heterostructures, grain boundaries, p-n junctions, etc.), as shown in Fig. 14(b).
- Local topography/spectroscopy combined with surface transport investigations.
- Study of surface electromigration.
- Investigation of extremely miniaturized planar devices, such as FET.
- In the three-tip arrangement of Fig. 15(a), current flowing between the source (S) and drain (D) contacts modifies the equilibrium electronic distribution at the sample surface along the path S-D. The intermediate tip (G) can then be used as a probe to measure the change induced by the current S-D. In turn, the structure of Fig. 15(a) can be viewed as an extremely miniaturized three-terminal device (FET-like). The structure of Fig. 15(b) is a generalization of the example of Fig. 15(a) and can be used to probe electronic distributions at several points (G₁, G₂, ...) when a current is flowing along a current channel between the S and D contacts of an FET.
- Reading and writing of digital information in a high-density memory.

The following description is intended to give hints for the application of the multiple-tip unit of the present invention in an arrangement similar to conventional magnetic disk memories.

Fig. 16 shows an arrangement where a multiple-tip unit 56 is attached to a read/write head 57 which is supported for movement parallel to the surface of a rotating disk 58. The disk's surface 59 carries a coating 60 which is capable of storing digital information in response to tunnel current flowing between any one of the tips 62 and said surface 59.

The multiple-tip unit 56 can simultaneously cooperate for reading/writing information with as many tracks on the memory disk 58 as it has tunnel tips 62. The maximum number of tips depends on the ability to manufacture uniform disk surfaces and tip units, considering that the multiple-tip unit of the invention has nanometer dimensions.

To avoid crashing of head 57 into the surface 59 of disk 58, all large-scale excursions of head 57 are performed at sufficiently large distance between head unit 57 and disk surface 59. Fine approach to within tunnel distance, i.e. in the nanometer range, for reading and writing information, is made by controlling the tunnel current across the gap between the tips 62 and the surface 59 of the storage disk 58, much the same as it is done in scanning tunneling microscopy.

The bit resolution on any one of the tracks is expected to be comparable to STM resolution, i.e. in the order of 1 nm. The minimum distance between the tracks is determined by the multiple-tip unit, and is in the order of 10 nm. This would yield a bit density of about 10¹³ bits/cm²

A ten-tip unit has an overall length of about 0,1 µm. For this size, the manufacturing processes today available in the "high-tech" industry should yield sufficient uniformity of the units. And to provide storage disks 58 with the required flatness, it is envisioned that they may consist of wafers grown epitaxially.

## Claims

1. Multiple STM-tip unit comprising a plurality of individually connectable, electrically separated tunnel tips, ***characterized*** in that the tunnel tips are designed as pointed portions (34) of sandwich structures comprising, in a common sandwiched block (5, 19), a plurality of conducting layers (1...4; 20, 21; 41, 46, 50) each associated with a at least one of said tunnel tips (11...14; 22...27; 52...54) with insulating layers (6...8; 40, 44, 48) intercalated between said conducting layers (1...4; 20, 21; 41, 46, 50), the latter each having a contact pad (16; 36, 43, 49) for connection to appertaining electronics, the thickness, area and material characteristics of said insulating layers (6...8; 40, 44, 48) being chosen such that the tunnel current through an insulating layer (6, 7, 8; 44, 48) which is intercalated between any two adjacent conducting layers (1, 2; 2, 3; 3, 4; 20, 21; 41, 46; 46, 50) is negligible with respect to the tunnel current flowing across the gap between each of the two respectively involved tunnel tips (11...14: 22...27; 52...54) and the surface with which said tips (11...14; 22...27; 52...54) cooperate.

2. Multiple-tip unit in accordance with claim 1, ***characterized*** in that said common sandwiched block (19) is designed to have two or more pointed portions (34) and that each of the conducting layers (20,21) consists of a number of electrically separate portions, such that each of the tips (22...27) formed at one of said plurality of pointed portions (34) of the unit is individually connectable electrically.

3. Multiple-tip unit in accordance with claim 1, for employment in a rotating disk storage device, ***characterized*** in that said common sandwiched block (56) is attached to a read/write head (57) radially movable with respect to a rotatable disk (58) carrying, on its surface (59) a coating (60) capable of storing digital information in discrete storage locations (61) arranged along circular tracks on said disk (58), and that said tunnel tips (62) are positionable for cooperation with said storage locations for the reading and/or writing of bits of information.

4. Method for manufacturing a multiple-tip unit in accordance with claim 1, ***characterized*** by the following process steps:
- providing a substrate (30) coated with a layer of soluble resist (31) and a layer of photoresist (32) on top of said resist layer (31);
- providing at least one hole (33) in said photoresist layer (32) of a size and shape to accommodate the multiple-tip unit structure (34/35);
- providing a first insulating layer (40) to cover the entire bottom area of said hole (33);
- depositing a first conducting layer (41) on top of said insulating layer (40) to form a conducting layer and contact pads (36);
- depositing a second insulating layer (44) through said hole (33) using a first mask (45)that covers the first one of the pads (36);
- depositing a second conducting layer (46) on top of said second insulating layer (44), still using said first mask (45);
- depositing any further insulating layers (48) and conducting layers (50) as the design of the multiple-tip unit may require, using any further masks (47) as appropriate;
- dissolving the photoresist (32);
- detaching the resulting structure from the substrate (30) by dissolving said resist (31).

## Patentansprüche

1. Eine Einheit mit mehreren Spitzen für ein Rastertunnelmikroskop, wobei die Einheit eine Vielzahl von einzeln anschließbaren, elektrisch getrennten Tunnelspitzen enthält und dadurch gekennzeichnet wird, daß die Tunnelspitzen als spitzzulaufende Teile (34) von Sandwich-Strukturen konzipiert sind, die in einem gemeinsamen mehrschichtigen Block (5, 19) eine Vielzahl von leitfähigen Schichten (1...4; 20, 21; 41, 46, 50) enthalten, von denen jede mit wenigstens einer von den Tunnelspitzen (11...14; 22...27; 52...54) mit Isolierschichten (6...8; 40, 44, 48), die zwischen den leitfähigen Schichten (1...4; 20, 21; 41, 46, 50) eingelagert sind, verbunden ist, wobei die letzteren ein Kontaktpad (16; 36, 43, 49) zum Anschluß an zugehörige Elektronik haben, wobei Dicke, Bereich und Materialcharakteristika dieser Isolierschichten (6...8; 40, 44, 48) ausgewählt werden, so daß der Tunnelstrom durch eine Isolierschicht (6, 7, 8; 44, 48), die zwischen irgendeiner der beiden angrenzenden leitfähigen Schichten (1, 2; 2, 3; 3, 4; 20, 21; 41, 46; 46, 50) eingelagert ist, unerheblich in bezug auf den Tunnelstrom ist, der durch den Spalt zwischen jeder der beiden betreffenden Tunnelspitzen (11...14; 22...27; 52...54) und der Oberfläche fließt, mit der diese Spitzen (11...14; 22...27; 52...54) kooperieren.

2. Eine Einheit mit mehreren Spitzen gemäß Anspruch 1, dadurch gekennzeichnet, daß der gemeinsame mehrschichtige Block (19) konzipiert wird, um zwei oder mehr spitzzulaufende Teile (34) zu haben, und daß jede der leitfähigen Schichten (20, 21) aus einer Anzahl von elektrisch getrennten Teilen besteht, so daß jede der Spitzen (22...27), die aus einem aus der Vielzahl von spitzzulaufenden Teilen (34) der Einheit gebildet wird, einzeln elektrisch angeschlossen werden kann.

3. Eine Einheit mit mehreren Spitzen gemäß Anspruch 1 zur Anwendung in einer rotierenden Plattenspeichereinheit, dadurch gekennzeichnet, daß der gemeinsame mehrschichtige Block (56) mit einem Lese-/Schreibkopf (57) verbunden wird, der sich in bezug auf eine rotierbare Platte (58) radial bewegt, die auf ihrer Oberfläche (59) eine Schicht (60) trägt, welche die Speicherung von digitalen Informationen in diskreten Speicherplätzen (61) ermöglicht, die entlang von kreisförmigen Spuren auf der Platte (58) angeordnet sind, und daß die Tunnelspitzen (62) zur Kooperation mit den Speicherplätzen zum Lesen und/oder Schreiben von Informationsbits positionierbar sind.

4. Ein Verfahren zur Herstellung einer Einheit mit mehreren Spitzen gemäß Anspruch 1, das durch die folgenden Schritte gekennzeichnet wird:
- Bereitstellung eines Substrats (30), das mit einer Schicht löslichem Resist (31) und einer Schicht Photoresist (32), die auf der Resistschicht (31) aufgetragen wurde, bedeckt ist;
- Bereitstellung von wenigstens einem Loch (33) in der Photoresistschicht (32), dessen Größe und Form zur Unterbringung der Einheit mit mehreren Spitzen (34/35) geeignet ist;
- Bereitstellung einer ersten Isolierschicht (40), um den gesamten unteren Bereich des Lochs (33) abzudecken;
- Auftragen einer ersten elektrischen leitfähigen Schicht (41) auf der Isolierschicht (40), um eine leitfähige Schicht und Kontaktpads (36) zu bilden;
- Auftragen einer zweiten elektrischen leitfähigen Schicht (44) durch dieses Loch (33) mittels einer ersten Maske (45), welche das erste der Pads (36) abdeckt;
- Auftragen einer zweiten leitfähigen Schicht (46) auf diese zweite Isolierschicht (44) mittels der ersten Maske (45);
- Auftragen von weiteren Isolierschichten (48) und leitfähigen Schichten (50) wie dies die Konzeption der Einheit mit mehreren Schichten erfordert unter Verwendung von irgendwelchen weiteren Masken (47), die sich als geeignet erweisen;
- Auflösen des Photoresists (32); und
- Ablösen der resultierenden Struktur von dem Substrat (30) durch Auflösen des Resists (31).

## Revendications

1. Unité à pointes multiples pour un microscope à balayage à effet tunnel comprenant une pluralité de pointes à effet tunnel séparées électriquement, pouvant être connectées individuellement, caractérisée en ce que les pointes à effet tunnel sont configurées comme des parties en pointe (34) de structures en sandwich comprenant, dans un bloc commun en sandwich (5, 19), une pluralité de couches conductrices (1...4; 20, 21; 41, 46, 50) chacune étant associée avec au moins l'une desdites pointes à effet tunnel (11...14; 22...27; 52...54) avec des couches isolantes (6...8; 40, 44, 48) intercalées entre lesdites couches conductrices (1...4; 20, 21; 41, 46, 50), la dernière ayant une plage de contact (16; 36, 43, 49) pour la connexion à des systèmes électroniques associés, l'épaisseur, la surface et les caractéristiques du matériau desdites couches isolantes (6...8; 40, 44, 48) étant choisies de telle sorte que le courant à effet tunnel circulant dans une couche isolante (6, 7, 8; 44, 48) qui est intercalée entre deux quelconques couches conductrices adjacentes (1, 2; 2, 3; 3, 4; 20, 21; 41, 46; 46, 50) est négligeable par rapport au courant à effet tunnel circulant dans l'intervalle entre chacune des deux pointes à effet tunnel respectivement mises en oeuvre (11...14; 22...27; 52...54) et la surface avec laquelle lesdites pointes (11...14; 22...27; 52...54) coopèrent.

2. Unité à pointes multiples selon la revendication 1, caractérisée en ce que ledit bloc commun en sandwich (19) est destiné à avoir deux parties en pointe ou davantage (34) et en ce que chacune des couches conductrices (20, 21) consiste en un certain nombre de parties électriquement séparées, de telle sorte que chacune des pointes (22...27) formées à l'une de ladite pluralité de parties en pointe (34) de l'unité peut être connectée électriquement de manière individuelle.

3. Unité à pointes multiples selon la revendication 1, destinée à être utilisée dans un dispositif de stockage à disque rotatif, caractérisée en que ledit bloc commun en sandwich (56) est fixé à une tête de lecture/écriture (57) pouvant se déplacer radialement par rapport à un disque rotatif (58) portant, sur sa surface (59) un revêtement (60) pouvant stocker une information numérique dans des emplacements de stockage discrets (61) disposés le long de pistes circulaires sur ledit disque (58), et en ce que lesdites pointes à effet tunnel (62) peuvent être positionnées pour coopérer avec lesdits emplacements de stockage pour la lecture et/ou l'écriture de bits d'information.

4. Procédé de fabrication d'une unité à pointes multiples selon la revendication 1, caractérisé par les étapes de traitement suivantes:
- fourniture d'un substrat (30) recouvert d'une couche de résist soluble (31) et d'une couche de photorésist (32) sur le dessus de ladite couche de résist (31);
- fourniture d'au moins un trou (33) dans ladite couche de photorésist (32) d'une dimension et d'une forme pouvant s'adapter à la structure d'unité à pointes multiples (34/35);
- fourniture d'une première couche isolante (40) pour recouvrir la totalité de la surface du fond dudit trou (33);
- dépôt d'une première couche conductrice (41) sur le dessus de ladite couche isolante (40) pour former une couche conductrice et des plages de contact (36);
- dépôt d'une seconde couche isolante (44) par l'intermédiaire dudit trou (33) en utilisant un premier masque (45) qui recouvre la première des plages (36);
- dépôt d'une seconde couche conductrice (46) sur le dessus de ladite seconde couche isolante (44), en utilisant ledit premier masque (45);
- dépôt d'autres couches isolantes supplémentaires (48) et de couches conductrices (50) si la configuration de l'unité à pointes multiples peut le nécessiter, en utilisant d'autres masques supplémentaires (47) si approprié;
- dissolution du photorésist (32);
- détachement de la structure résultante du substrat (30) en dissolvant ledit résist (31).
